# EUROPÄISCHE PATENTSCHRIFT

(11) **EP 0 995 979 B1**
(45) Veröffentlichungstag und Bekanntmachung des Hinweises auf die Patenterteilung: **23.07.2003**
(21) Anmeldenummer: 98120077.7
(22) Anmeldetag: 23.10.1998
(51) Int. Cl.: G01L 9/00, G01L 19/04, G01L 19/14

(54) **Druckaufnehmer**
Pressure sensor
Capteur de pression

(43) Veröffentlichungstag der Anmeldung: 26.04.2000
(73) Patentinhaber: Endress + Hauser GmbH + Co.KG., 79689 Maulburg (DE)
(72) Erfinder: Flögel, Karl, 79560 Schopfheim (DE); Uehlin, Thomas, 79560 Schopfheim (DE)
(74) Vertreter: Andres, Angelika

(56) Entgegenhaltungen:
- EP-A- 0 757 237
- DE-A- 4 234 290

## Beschreibung

Die Erfindung betrifft einen Druckaufnehmer zur Bestimmung des Drucks eines Prozeßmediums. Der Druckaufnehmer hat eine keramische Druckmeßzelle mit einer dem Prozeßmedium ausgesetzten Membran, die in einem metallischen Gehäuse in axialer Richtung gehaltert ist und ein einer durch den Druck hervorgerufenen Durchbiegung der Membran entsprechendes, abgreifbares elektrisches Signal liefert.

Bei Druckaufnehmern dieser Art wird üblicherweise die keramische Druckmeßzelle mittels einer direkt mit ihr in Kontakt stehenden metallischen Befestigungsvorrichtung im Gehäuse gegen einen Anschlag verspannt. Bei wechselnden Temperaturen kommt es zu unerwünschten mechanischen Spannungen zwischen der Druckmeßzelle und der Befestigungsvorrichtung (und auch dem Gehäuse), die auf unterschiedlichen thermischen Ausdehnungskoeffizienten der verwendeten Materialien beruhen. Steigende Temperaturen führen beispielsweise dazu, daß sich das Metallgehäuse und die zur Befestigung der Druckmeßzelle dienende metallische Befestigungsvorrichtung stärker ausdehnen als die keramische Druckmeßzelle. Ebenso kann es zu Verschiebungen einzelner Teile zueinander kommen, wobei diese ihre relative Position zueinander verändern. In einigen Fällen waren diese Verschiebungen bei nachfolgender Temperaturerniedrigung nicht in vollem Umfang reversibel und es blieben dauerhafte Verformungen zurück. Die Folge solcher Verformungen ist eine unerwünschte Temperatur-Hysterese, die den bzw. die Druckmeßwerte verfälscht.

In der DE-A 42 34 290 ist eine einem Prozeßmedium direkt ausgesetzte keramische Druckmeßzelle beschrieben, die durch eine metallische Befestigungsvorrichtung, eine sogenannte Fixierhülse, in einem metallischen Gehäuse befestigt ist. Der Gegenstand der DE-A 42 34 290 dient dazu, die keramische Druckmeßzelle radial abzustützen und von axialen Spannungen durch die Befestigung im Gehäuse weitestmöglich zu entlasten. Die DE-A 42 34 290 schlägt dazu (unter anderem) auch eine Keramikscheibe (dort "Keramikstützkörper" genannt) vor, die in axialer Richtung zwischen der keramischen Druckmeßzelle und der metallischen Befestigungsvorrichtung (dort "Fixierhülse" genannt) angeordnet ist und deren thermischer Ausdehnungskoeffizient dem der Druckmeßzelle entspricht.

Nachteilig ist beim Gegenstand der DE-A 42 34 290 allerdings, daß die erwähnte Keramikscheibe mittels Aktivhartlot oder Glaslot fest mit der Druckmeßzelle verbunden ist. Unterschiedliche wärmebedingte Ausdehnungen der aneinander grenzenden Materialien führen jedoch, wie oben geschildert, zu unerwünschten radialen Spannungen zwischen der metallischen Befestigungsvorrichtung und der Keramikscheibe. Wegen ihrer festen Lotverbindung mit der Druckmeßzelle gibt die Keramikscheibe die thermisch bedingten Radialspannungen an die Druckmeßzelle weiter, was zu den oben erwähnten Verfälschungen der gemessenen Druckwerte bzw. zu Temperatur-Hystere-Effekten führt.

Eine weitere keramische Druckmeßzelle ist in der EP-A-0 757 237 beschrieben.

Eine Aufgabe der Erfindung ist es daher, einen Druckaufnehmer zu schaffen, der Temperatur-Hystersee-Effekte, die durch Spannungen zwischen der Druckmeßzelle und dem Gehäuse infolge von wärmebedingten Ausdehnungen verursacht werden, vermeidet.

Zur Lösung dieser Aufgabe ist ein Druckaufnehmer zur Bestimmung des Drucks eines Prozeßmediums vorgeschen, so wie es im Patentanspruch 1 definiert ist.

Eine bevorzugte Ausgestaltung der Erfindung sieht einen Druckaufnehmer vor, bei dem die metallische Befestigungsvorrichtung ein metallischer Ring oder eine Scheibe ist, die bzw. der im Gehäuse lösbar befestigt ist.

Eine vorteilhafte Ausgestaltung der Erfindung sieht vor, einen Zwischenkörper mit einem die Druckmeßzelle radial wenigstens teilweise umgreifenden Zentrierteil zur Zentrierung der Druckmeßzelle und des Zwischenkörpers im Gehäuse zu verwenden.

Eine besondere, vorteilhafte Weiterbildung der Erfindung besteht darin, daß in einer, auf der Druckmeßzelle aufliegenden ersten Stirnfläche des Zwischenkörpers Aussparungen vorgesehen sind, durch die elektrisch leitende Verbindungen geführt sind. Der Vorteil ist, daß damit in einfacher Weise Abschirmungen gegen störende elektromagnetische Einstrahlungen eines Elektronikteils und der Druckmeßzelle leitend miteinander verbunden werden.

Eine andere, besonders vorteilhafte Weiterbildung der Erfindung minimiert die durch wärmebedingte Ausdehnungen verursachte Reibung zwischen der Befestigungsvorrichtung und dem Zwischenkörper des Druckaufnehmers. Dazu ist zwischen dem Zwischenkörper und der Befestigungsvorrichtung eine Folie aus kaltfließendem Material angeordnet.

Ein weitere Vorteil der Erfindung ist, daß sie nicht nur ermöglicht, in radialer Richtung auftretende, auf die Druckmeßzelle einwirkende Spannungen abzubauen, sondern daß sie auch auf einfache Weise erlaubt, in axialer Richtung aufgrund unterschiedlicher wärmebedingter Ausdehnungen auf die Druckmeßzelle einwirkende Spannungen zu kontrollieren. Durch geeignete Wahl der axialen Erstreckung des Zwischenkörpers (Höhe bzw. Dicke des Zwischenkörpers) unter Berücksichtigung von federnden bzw. elastischen Eigenschaften einer Dichtung gegen das Prozeßmedium, können auch axiale Belastungen der Druckmeßzelle so gering wie möglich und vor allem weitgehend konstant gehalten werden.

Die Erfindung wird nun anhand von in den Figuren der Zeichnung dargestellten bevorzugten Ausführungsformen beschrieben und erläutert.
- Fig. 1: zeigt schematisch im Vertikalschnitt eine erste Variante des Druckaufnehmers mit teilweise aufgebrochener Druckmeßzelle und eine erste Variante eines Zwischenkörpers;
- Fig. 2: zeigt im Schnitt und vergrößert eine zweite Variante des Zwischenkörpers gemäß der in Fig. 1 mit "E" bezeichneten Einzelheit;
- Fig. 3: zeigt vergrößert den Zwischenkörper nach Fig. 2 mit an Grenzflächen vorgesehenen reibungsmindernden Folien;
- Fig. 4: zeigt vergrößert eine dritte Variante des Zwischenkörpers gemäß der in Fig. 1 mit "E" bezeichneten Einzelheit;
- Fig. 5: zeigt vergrößert eine besondere Ausgestaltung des Zwischenkörpers nach Fig. 4;
- Fig. 6: zeigt vergrößert eine vierte Variante des Zwischenkörpers gemäß der in Fig. 1 mit "E" bezeichneten Einzelheit;
- Fig. 7: zeigt eine schematische Teilansicht einer in Kontakt mit der Druckmeßzelle stehenden Oberfläche des Zwischenkörpers nach Fig. 6, gesehen aus der in Fig. 6 mit "VII" bezeichneten Richtung, und
- Fig. 8: zeigt schematisch und vereinfacht im Vertikalschnitt eine zweite Variante des Druckaufnehmers mit einem Prozeßanschluß.

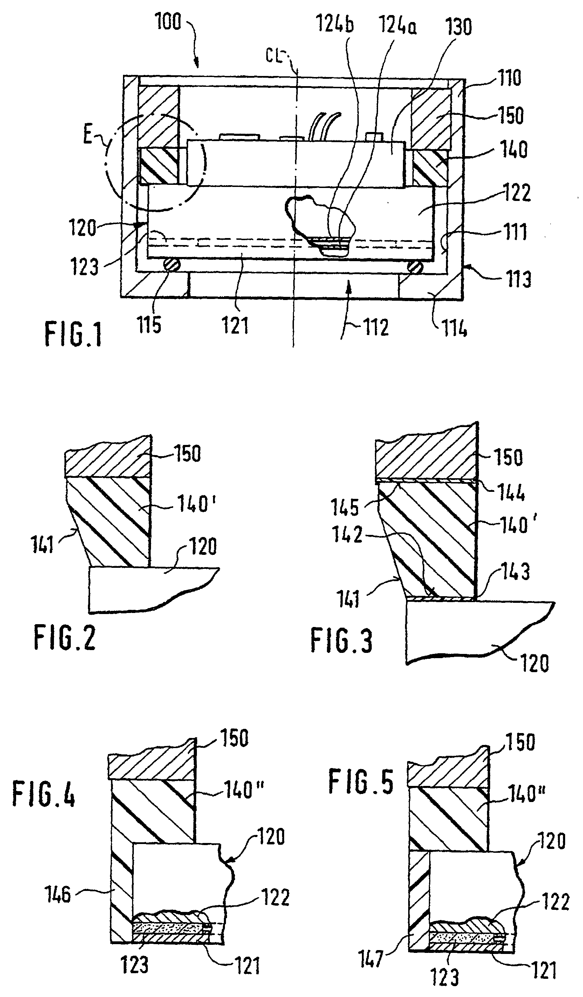

In Fig. 1 ist ein Druckaufnehmer 100 dargestellt, der ein metallisches Gehäuse 110 mit einer durchgehenden Bohrung 111 umfaßt, in der eine keramische Druckmeßzelle 120 gehaltert ist. Diese ist direkt einem hier der Einfachheit halber nicht dargestellten Prozeßmedium ausgesetzt, das über eine Eintrittsöffnung 112 im frontseitigen Bereich 113 der Bohrung 111 auf eine Membran 121 der Druckmeßzelle 120 einwirkt. Bei der Druckmeßzelle 120 handelt es sich vorzugsweise um eine kapazitive Druckmeßzelle, was durch die schematisch dargestellten Elektroden 124a, 124b auf der Membran 121 und auf Grundkörper 122 veranschaulicht ist. Die Membran 121 ist an ihrem Rand mit einem Grundkörper 122 verlötet, vorzugsweise mit einem Aktivhartlot 123. Es ist aber genauso gut möglich, für den Druckaufnehmer 100 statt der kapazitiven eine piezo-resistive Druckmeßzelle zu verwenden.

Ein ausgangsseitig an der Druckmeßzelle 120 abgreifbares Meßsignal, das dem Druck des auf die Membran 121 wirkenden Prozeßmediums entspricht, wird in einem hier nur schematisch dargestellten Elektronikteil 130 aufbereitet.

Die Druckmeßzelle 120 ist im Gehäuse 110 an einem dem Prozeßmedium zugewandten, ersten Anschlag 114 federnd gelagert, der durch eine Verringerung des freien Querschnitts der durchgehenden Bohrung 111 des Gehäuses 110 gebildet wird. Das Innere des Gehäuses 110 ist mittels einer zwischen der Druckmeßzelle 120 und dem ersten Anschlag 114 angeordneten Dichtung 115 abgedichtet, die gleichzeitig die federnden Eigenschaften der Abstützung der Druckmeßzelle 120 gewährleistet. Die Dichtung 115 ist, wie in Fig. 1 dargestellt, beispielsweise eine elastische O-Ring-Dichtung, aber dies ist für die Realisierung der Erfindung nicht zwingend erforderlich, so daß auch jede andere federnde Dichtung (und Dichtungsform) verwendet werden kann.

Auf der membran-abgewandten Seite des Grundkörpers 122 der Druckmeßzelle 120 liegt ein Zwischenkörper 140 auf, der wiederum von einer metallischen Befestigungsvorrichtung 150 im Gehäuse 110 gehaltert wird. Der Zwischenkörper 140 besteht aus keramischem Material mit einem thermischen Ausdehnungskoeffizienten, der vorzugsweise dem des keramischen Grundkörpers 122 der Druckmeßzelle 120 entspricht.

Es ist ein Zwischenkörper 140 aus einem keramischen Material vorgesehen. Dieses Material kann, muß aber nicht zwingend, mit dem des Grundkörpers 122 übereinstimmen.

Die metallische Befestigungsvorrichtung 150, die axial auf den Zwischenkörper 150 und damit die Druckmeßzelle 120 wirkt, ist am bzw. im Gehäuse 110 lösbar befestigt. Vorzugsweise ist die Befestigungsvorrichtung 150, wie in Fig. 1 veranschaulicht, ein Ring. Sie kann aber auch eine Scheibe sein, die wie der Ring beispielsweise aus Messing besteht und mit einem Außengewinde versehen ist, das in ein entsprechendes Innengewinde im Gehäuse 110, genauer: in einem prozeßmedium-abgewandten Bereich der Bohrung 111, einschraubbar ist. Zur Vereinfachung der Fig. 1 sind die beiden Gewinde nicht dargestellt.

Eine bezeichnete Mittellinie CL veranschaulicht, daß beim Ausführungsbeispiel von Fig. 1 das Gehäuse 110, die Bohrung 111, die Druckmeßzelle 120, der Zwischenkörper 140 und die Befestigungsvorrichtung 150 rotationssymmetrisch ausgeführt sind. Werden (hier nicht dargestellte) elektrische Zuleitungen zum Elektronikteil 130 verwendet, ist es vorteilhaft, wie in Fig. 1 dargestellt, den Zwischenkörper 140 und die Befestigungsvorrichtung 150 ringförmig auszuführen.

In Fig. 2 ist schematisch die Einzelheit E von Fig. 1 dargestellt, die in vereinfachter Form und gegenüber Fig. 1 in vergrößertem Maßstab eine zweite Variante eines Zwischenkörpers 140' wiedergibt, der zwischen der Druckmeßzelle 120 und der Befestigungsvorrichtung 150 angeordnet ist. Diese zweite Variante des Zwischenkörpers 140' unterscheidet sich von der ersten Variante des Zwischenkörpers 140 nach Fig. 1 durch eine dem Gehäuse 110 zugewandte Abschrägung 141. Mit dieser wird in einfacher Weise ein Übergang vom Durchmesser der Druckmeßzelle 120 auf den größeren Innendurchmesser der Bohrung 111 des Gehäuses 110 realisiert.

In Fig. 3 ist eine besondere Weiterbildung der Anordnung nach Fig. 2 dargestellt. Zwischen einer ersten Stirnfläche 142 des Zwischenkörpers 140' und einer entsprechenden Fläche 125 der Druckmeßzelle 120 ist eine dünne Schicht aus kaltfließendem Material, beispielsweise einem Fluorkunststoff, angebracht ist. Vorzugsweise ist diese Schicht eine erste Folie 143 aus Polyfluorethylen (PTFE), die vorteilhafterweise auf dem Zwischenkörper 140', insbesondere auf dessen erster Stirnfläche 142, aufgebracht ist.

Wichtiger ist jedoch eine zweite Folie 144 aus kaltfließendem Material, beispielsweise einem Fluorkunststoff, auf einer zweiten Stirnfläche 145 des Zwischenkörpers 140' vorzusehen, um auch dort die Reibung zwischen der Befestigungsvorrichtung 150 und dem Zwischenkörper 140' bei auftretenden wärmebedingten Ausdehnungen zu minimieren und die Verschieblichkeit von Zwischenkörper 140' und Befestigungsvorrichtung 150 zueinander unter allen Umständen zu gewährleisten und irreversible Lageänderungen zu vermeiden. Vorzugsweise besteht die zweite Folie 144 wie die erste Folie 143 aus Polyfluorethylen (PTFE).

Fig. 4 zeigt ebenfalls schematisch die Einzelheit E von Fig. 1 und in vereinfachter Form und in gegenüber Fig. 1 vergrößertem Maßstab eine dritte Variante eines Zwischenkörpers 140". Zur Vereinfachung sind auch hier das Gehäuse 110, die in der Einzelheit E von in Fig. 1 dargestellte Gehäusewand und auch der in der Einzelheit liegende Teil des Elektronikteils 130 nicht dargestellt. Diese dritte Variante des Zwischenkörpers 140'' unterscheidet sich von den beiden anderen Varianten der Fig. 1 bis 3 abgebildeten durch einen am Zwischenkörper 140" vorgesehenen Zentrierteil 146, der die Druckmeßzelle 120 radial wenigstens teilweise umschließt. Der Vorteil eines solchen Zwischenkörpers 140" mit Zentrierteil 146 ist, daß damit die Druckmeßzelle 120 im Gehäuse 110 bei der Montage besser zentriert werden kann. Außerdem kann der nicht-metallische Zentrierteil 146 eine elektrische Isolation zum metallischen Gehäuse 110 gewährleisten, wenn die Membran 121 der Druckmeßzelle 120 am Grundkörper 122 mittels einer (metallischen) Aktivhartlotfügung 123 befestigt ist.

In Fig. 5 ist eine besondere Ausgestaltung des erfindungsgemäßen Zwischenkörpers 140'' nach Fig. 4 schematisch dargestellt. Diese Ausgestaltung des Zwischenkörpers 140" unterscheidet sich von der in Fig. 4 dargestellten dadurch, daß der Zentrierteil als separater Zentrierteil 147 ausgeführt ist. Er kann aus einem gegenüber Keramik preiswerteren Kunststoff bestehen.

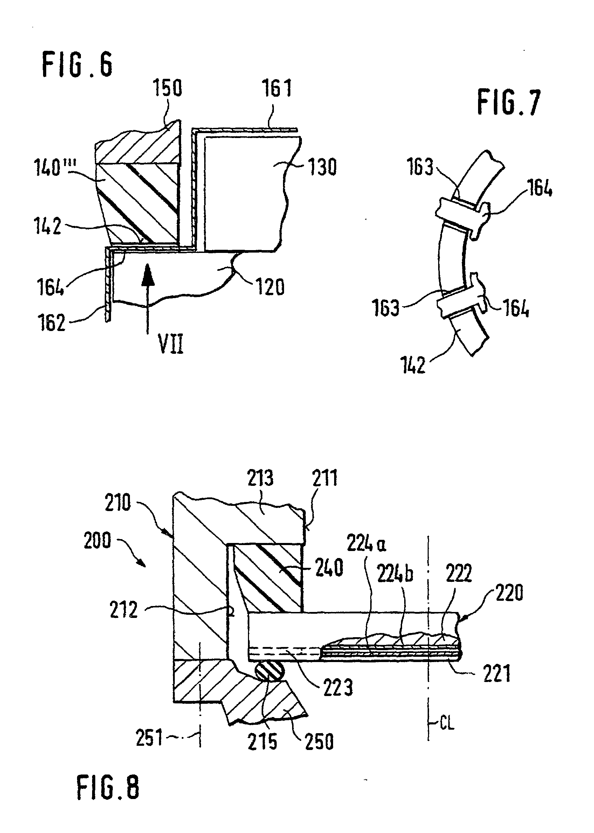

Fig. 6 ist eine schematische Darstellung einer vierten Variante eines Zwischenkörpers 140''' im Zusammenhang mit der Einzelheit E der Fig. 1. Der Einfachheit halber ist für Fig. 6 die grundsätzliche Querschnittsform des in Fig. 2 dargestellten Zwischenkörpers 140' gewählt worden, was aber keine Einschränkung bedeutet. Im Prinzip eignet sich für die im folgenden erläuterte vierte Variante auch jede beliebige andere Variante des Zwischenkörpers.

Das Besondere der vierten Variante des Zwischenkörpers 140''' der Fig. 6 ist, daß sie für einen Druckaufnehmer 100 mit interner, den Elektronikteil 130 umgebender, im wesentlichen deckelförmiger elektromagnetischer Abschirmung 161 konzipiert ist. Um eine solche Abschirmung 161 des Elektronikteils 130 mit einer entsprechenden Abschirmung 162 für die Druckmeßzelle 120 leitend verbinden zu können, sind, wie Fig. 7 zeigt, in der ersten Stirnfläche 142 des Zwischenkörpers 140''' durchgehende, möglichst flache Aussparungen 163 vorgesehen, durch die elektrische Kontaktleitungen 164 geführt werden, die die Abschirmungen 161 und 162 miteinander verbinden. Falls gewünscht, kann auch hier auf die erhabenen Teile der ersten Stirnfläche 142, die in direktem Kontakt mit der Druckmeßzelle 120 stehen, ebenfalls, wie oben im Text zur Fig. 3 erwähnt, eine erste Folie 143 aus reibungsminderndem Material aufgebracht werden.

In Fig. 8 ist eine zweite Variante der Erfindung schematisch dargestellt. Ein solcher Druckaufnehmer 200 ist besonders für einen einfachen, von der Prozeßseite her vorzunehmenden Wechsel oder Austausch einer Druckmeßzelle 220 konzipiert. Eine der ersten, in Fig. dargestellten Variante der Erfindung zur Aufnahme der dortigen Druckmeßzelle 120 vorgesehene Bohrung 111 des Gehäuses 110 vergleichbare Bohrung 211 in einem Gehäuse 210 weist in Fig. 8 nur in ihrem prozeßseitigen Teil einen Durchmesser auf, der größer als der äußere Durchmesser der Druckmeßzelle 220 ist. Dieser frontseitige Teil 212 der Bohrung 211 wird im Innern des Gehäuses 210 durch einen rückwärtigen zweiten Anschlag 213 begrenzt, der wiederum zur Abstützung des Zwischenkörpers 240 dient, für den hier der Einfachheit halber die Querschnittsform der Ausführungsform nach der Fig. 2 gewählt und der hier zwischen dem als Befestigungsvorrichtung dienenden zweiten Anschlag 213 und der Druckmeßzelle 220 angeordnet ist. Diese wird durch einen mit lösbaren Befestigungsmitteln, vorzugsweise Schrauben 251, am Gehäuse 210 befestigten Prozeßanschluß 250 axial und federnd im Gehäuse 210 des Druckaufnehmers 200 gehaltert.

Bei der Druckmeßzelle 220 handelt es sich vorzugsweise um eine kapazitive Druckmeßzelle, was durch die schematisch dargestellten Elektroden 224a, 224b auf der Membran 221 und auf Grundkörper 222 veranschaulicht ist. Die Membran 221 ist an ihrem Rand mit einem Grundkörper 222 verlötet, vorzugsweise mit einem Aktivhartlot 223. Es ist aber genauso gut möglich, für den Druckaufnehmer 200 statt der kapazitiven eine piezo-resistive Druckmeßzelle zu verwenden.

Ein ausgangsseitig an der Druckmeßzelle 220 abgreifbares Meßsignal, das dem Druck des auf die Membran 221 wirkenden Prozeßmediums entspricht, wird in einem hier der Einfachheit halber nicht dargestellten Elektronikteil aufbereitet.

Alternativ zu dem in Fig. 8 abgebildeten zweiten Anschlag 213, der durch einen Durchmessersprung der Bohrung 211 im Gehäuse 210 gebildet wird, kann, wenn aus fertigungstechnischen Gründen nur ein einzelner Durchmesser vorgesehen wird, auch die in Fig. 1 dargestellte ringförmige Befestigungsvorrichtung 150 verwendet werden, die in entsprechender Weise in die Bohrung eingeschraubt wird.

Die Abdichtung des Innenraums des Gehäuses 210 gegenüber dem Prozeßmedium wird durch eine federnde bzw. elastische Dichtung 215 gewährleistet, die zwischen der Druckmeßzelle 220 und dem Prozeßanschluß 250 angeordnet ist. Diese Dichtung 215 kann beispielsweise ein O-Ring oder eine andere federnde, ringförmige Dichtung sein, die eine axiale und federnde Einspannung der Druckmeßzelle 220 im Gehäuse 210 gewährleistet.

Für die in Fig. 8 dargestellte und besonders für eine prozeßseitige Montage der Druckmeßzelle 220 geeignete Ausführung der Erfindung kann auch der in Fig. 5 abgebildete Zwischenkörper 140'' mit separatem Zentrierteil 147, beispielsweise aus Kunststoff, verwendet werden. Ebenso ist es möglich, für die in Fig. 8 dargestellte zweite Variante der Erfindung einen Zwischenkörper nach den Fig. 3 oder Fig. 6 zu verwenden.

Die Erfindung beschränkt sich nicht auf die in den Fig. 1 bis 8 dargestellten Ausführungsformen.

## Patentansprüche

1. Druckaufnehmer (100) zur Bestimmung des Drucks eines Prozeßmediums,
- mit einem zum Prozeßmedium offenen metallischen Gehäuse (110),
-- das eine durchgehende Bohrung (111) mit einer darin aufgenommenen keramischen Druckmeßzelle (120) aufweist, die
--- einen keramischen Grundkörper (122) und
--- eine darauf angebrachte keramische, dem Prozeßmedium ausgesetzte Membran (121) umfaßt sowie
--- Mittel (124a, 124b, 130), zur Lieferung eines einer durch den auf die Membran (121) einwirkenden Druck hervorgerufenen Durchbiegung entsprechenden, abgreifbaren elektrischen signals, wobei
-- die Membran (121) in axialer Richtung federnd auf einem ersten Anschlag (114) im Gehäuse (110) oder federnd auf einem Prozeßanschluß (250)und
-- der Grundkörper (122) auf einem nicht-metallischen Zwischenkörper (140, 140', 140", 140''') aus keramischem Material abgestützt sind, der
--- seinerseits durch eine metallische Befestigungsvorrichtung (150) im Gehäuse (110) gehaltert wird, und
-- der Zwischenkörper (140, 140', 140", 140''') gegenüber der metallischen Befestigungsvorrichtung (150) radial beweglich ist.

2. Druckaufnehmer (100) nach Anspruch 1, bei dem die metallische Befestigungsvorrichtung (150) ein metallischer Ring oder eine Scheibe ist, die bzw. der im Gehäuse (110) lösbar befestigt ist.

3. Druckaufnehmer (100; 200) nach Anspruch 1, bei dem der Zwischenkörper (140, 140', 140'', 140'''; 240) einen die Druckmeßzelle (120; 220) radial wenigstens teilweise umgreifenden Zentrierteil (146) zur Zentrierung der Druckmeßzelle (120; 220) und des Zwischenkörpers (140, 140', 140'', 140'''; 240) im Gehäuse (110; 210) aufweist.

4. Druckaufnehmer (100; 200) nach Anspruch 1, bei dem in einer, auf der Druckmeßzelle (120; 220) aufliegenden ersten Stirnfläche (142) des Zwischenkörpers (140''') Aussparungen (163) vorgesehen sind, durch die elektrisch leitende Verbindungen (164) geführt sind.

5. Druckaufnehmer (100; 200) nach Anspruch 1, bei dem zwischen dem Zwischenkörper (140, 140', 140", 140'''; 240) und der Befestigungsvorrichtung (150; 213) eine Folie (144) aus kaltfließendem Material angeordnet ist.

## Claims

1. A pressure transducer (100) for measuring the pressure of a process medium,
- with a metallic housing (110) open to the process medium,
-- which has a through bore (111) with a therein-accommodated ceramic pressure-measuring cell (120) which
--- comprises a ceramic basic body (122) and
--- a thereon attached ceramic membrane (121) exposed to the process medium, as well as
--- means (124a, 124b, 130) for delivering a measurable electrical signal corresponding to a deflection induced by the pressure acting on the membrane (121), wherein
-- the membrane (121) is supported in the axial direction elastically on a first stop (114) within the housing (110) or elastically on a process connection (250) and
-- the basic body (122) is supported on a non-metallic intermediate body (140, 140', 140", 140"') made of ceramic material, which
--- is for its part mounted by means of a metallic fastening device (150) within the housing (110), and
-- the intermediate body (140, 140', 140", 140"') is radially movable relative to the metallic fastening device (150).

2. A pressure transducer (100) according to Claim 1, in which the metallic fastening device (150) is a metallic ring or a disc, releasably fixed in place within the housing (110).

3. A pressure transducer (100; 200) according to Claim 1, in which the intermediate body (140, 140', 140", 140"'; 240) has a centring part (146) radially enclosing the pressure-measuring cell (120; 220) at least partially, for the purpose of centring the pressure-measuring cell (120; 220) and the intermediate body (140, 140', 140", 140"'; 240) within the housing (110; 210).

4. A pressure transducer (100; 200) according to Claim 1, in which openings (163) are provided in a first front face (142) of the intermediate body (140"') positioned on top of the pressure-measuring cell (120; 220), through which openings electrically conductive connectors (164) are guided.

5. A pressure transducer (100; 200) according to Claim 1, in which a film (144) of cold-flowing material is positioned between the intermediate body (140, 140', 140", 140"'; 240) and the fastening device (150; 213).

## Revendications

1. Capteur de pression (100) pour définir la pression d'un liquide de procédé,
- avec un boîtier métallique (110) ouvert sur le liquide de procédé,
-- qui présente une perforation transversale (111) avec une cellule de mesure de pression (120) en céramique reçue dans celle-ci, qui
--- comprend un corps de base (122) en céramique et
--- une membrane (121) en céramique appliquée dessus qui est exposée au liquide de procédé, ainsi que
--- des moyens (124a, 124b, 130) pour fournir un signal électrique qui peut être mesurer correspondant à une flexion causée par la pression agissant sur la membrane (121), moyennant quoi
-- la membrane (121) est soutenue élastiquement en direction axiale sur une première butée (114) dans le boîtier (110) ou élastiquement sur une connexion de procédé (250) et
--- le corps de base (122) est soutenu sur un corps intermédiaire (140, 140', 140", 140"') non métallique en matière céramique qui
--- est lui-même maintenu par un dispositif de fixation (150) métallique dans le boîtier (110) et
-- le corps intermédiaire (140, 140', 140", 140"') est mobile radialement par rapport au dispositif de fixation (150) métallique.

2. Capteur de pression (100) selon la revendication 1, dans lequel le dispositif de fixation (150) métallique est un anneau ou un disque métallique qui est fixé de façon détachable dans le boîtier (110).

3. Capteur de pression (100 ; 200) selon la revendication 1, dans lequel le corps intermédiaire (140, 140', 140", 140"' ; 240) présente une pièce à centrer (146) qui entoure radialement au moins en partie la cellule de mesure de pression (120 ; 220) pour le centrage de la cellule de mesure de pression (120 ; 220) et du corps intermédiaire (140, 140', 140", 140"' ; 240) dans le boîtier (110 ; 210).

4. Capteur de pression (100 ; 200) selon la revendication 1, dans lequel des cavités (163) sont prévues dans une première face frontale s'appuyant sur la cellule de mesure de pression (120 ; 220) du corps intermédiaire (140"'), à travers lesquelles des liaisons (164) conductrices d'électricité sont guidées.

5. Capteur de pression (100 ; 200) selon la revendication 1, dans lequel un film (144) en matière de fluage à froid est disposé entre le corps intermédiaire (140, 140', 140", 140"' ; 240) et le dispositif de fixation (150 ; 213).
